# EUROPEAN PATENT APPLICATION

(11) **EP 1 209 403 A2**
(43) Date of publication of application: **29.05.2002**
(21) Application number: 01500228.0
(22) Date of filing: 13.09.2001
(51) Int. Cl.: F16L 33/207

(54) **Sealed hose connector**

(30) Priority: 22.11.2000 ES 200002856 U
(71) Applicant: V-90 Garciplastic, S.L., 28864 Ajalvir (Madrid) (ES)
(72) Inventor: Garcia Moran, Manuel, 28864 Alalvir (Madrid) (ES)
(74) Representative: Perez Bonal, Bernardo

(57) **Abstract**

Sealed hose connector comprised of a part (1) with a large external mortising (2), with its end having a large bevelled flange (3) and between this bevelled flange 83) and the start of the mortising are provided two half-rings (4) aligned parallel to the bevelled flange (3). It is further provided with an intermediate collar (6) made of a malleable material which receives the pressure of a sealing clamp and flange (7).

## Description

### OBJECT OF THE INVENTION

The present invention relates to a sealed hose connector from among the various means for connecting the ends of hoses.

The invention is characterised by a special construction of the connector, based on a construction having an external mortising on its innermost end, so that it defines a large bevelled flange on its end and two small protruding half-rings aligned parallel to the flange and internal to the mortising, connecting to the assembly a collar which pressurises and seals the expanded segment of the end of the hose.

### BACKGROUND OF THE INVENTION

Hose connectors made of plastic materials such as polypropylene are widely known and used, and their sealing means are usually also widely known.

The applicant holds Utility Model no. 1026028 "Improved fast locking hose connector", which includes an inner mortising in the form of multiple saw teeth for coupling the free end of the hose until a last segment in which the part maintains its original diameter.

The applicant is not aware of any hose connectors which provide the sealing conditions described hereunder.

### DESCRIPTION OF THE INVENTION

The invention object of the present description relates to a sealed hose connector from among the various means for connecting the ends of plastic hoses.

The invention is characterised by a special construction of the connector which comprises an end part provided with a large inner mortising, on its innermost end and along the lines of its generatrix, so that this defines a large bevelled flange on its outermost edge and at least two small half-rings aligned parallel to it and incorporated inside the base of the mortising.

Likewise, between the set formed by the end piece and the hose is provided a pressure collar which seals the expanded segment of the end of the tube with respect to the connector part by sealing this ring of malleable material with a clamp which fully embraces the ring except in a small sector meant to receive the expansion of the excess material of the ring.

### DESCRIPTION OF THE DRAWINGS

The present memory is accompanied by a set of drawings of a preferred example of the invention provided for purposes of illustration only and in a non-limiting way.

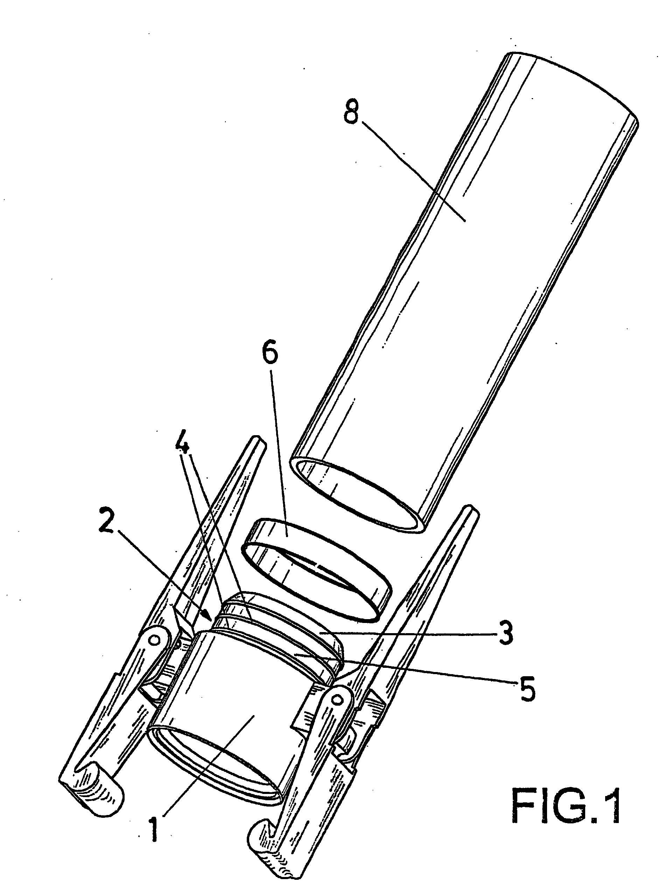

Figure 1 shows an exploded view of the connector, showing the various parts and other components.

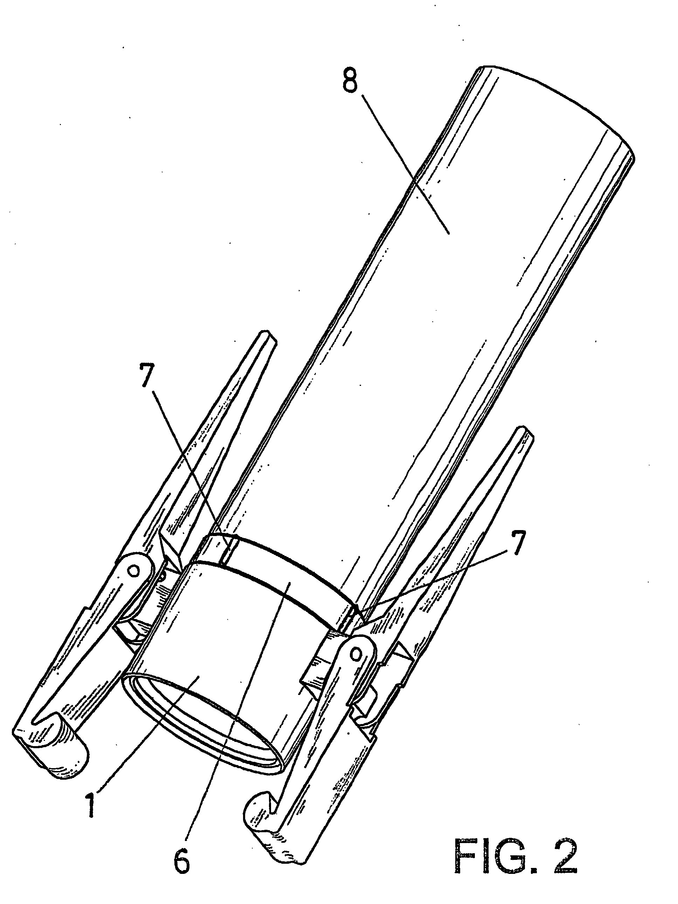

Figure 2 shows the connector after the union is sealed by means of the pressure ring.

### PREFERRED EMBODIMENT OF THE INVENTION

In view of the above, the present invention relates to a sealed hose connector, from among the various means for connecting the ends of hoses, preferably made of plastic, characterised in that part (1) is provided with a wide external mortising (2) which defines a large bevelled flange (3) and at least two small half-rings (4) aligned parallel to flange (3), which emerges from the base of the mortising (2).

An intermediate collar (6) made of a malleable material receives the pressure of a clamp, and the flange (7) of its excess material seals the expanded end of the hose (8).

The essence of the invention is not changed by variations in the materials, shape, size and arrangements of the components, which are described in a non-limiting way which should allow its reproduction by an expert.

## Claims

1. Sealed hose connector, from among the various means for connecting the ends of hoses, preferably made of plastic, **characterised in that** part (1) is provided with a wide external mortising (2) which defines a large bevelled flange (3) and at least two small half-rings (4) aligned parallel to flange (3), which emerge from the base (5) of the mortising (2), while an intermediate collar (6) made of a malleable material seals the expanded end of the hose (8) and has a flange (7) consisting of the excess material.
